# EUROPÄISCHE PATENTANMELDUNG

(11) **EP 0 763 404 A1**
(43) Veröffentlichungstag der Anmeldung: **19.03.1997**
(21) Anmeldenummer: 96112581.2
(22) Anmeldetag: 03.08.1996
(51) Int. Cl.: B25B 11/00

(54) **Werkstückauflagetisch mit einer Vakuumansaugvorrichtung zur Werkstückfixierung**

(30) Priorität: 19.08.1995 DE 19530584
(71) Anmelder: Göckel, Karl, 69254 Malsch (DE)
(72) Erfinder: Göckel, Karl, 69254 Malsch (DE)
(74) Vertreter: Schmid, Rudolf, Dipl.-Ing., Patentanwalt

(57) **Zusammenfassung**

Die vorliegende Erfindung betrifft ein Werkstückauflagetisch (1) mit einer Vakuumansaugvorrichtung (2) zur Werkstückfixierung, bestehend aus, einen Saugkanal (4) aufweisenden Vakuumelemente (5), die unterhalb des Werkstücks eine Ansaugfläche bilden, bei dem die Vakuumelemente jeweils ein austauschbares Verschleißelement (7) zur Werkstückauflage aufweisen, das die Verlängerung des Saugkanals bildet.

## Beschreibung

Die Erfindung betrifft einen Werkstückauflagetisch nach dem Oberbegriff des Hauptanspruchs.

Werkstückauflagetische mit Vakuumansaugvorrichtungen dienen zur Fixierung des Werkstücks zwecks weiterer Bearbeitung. Solche Vakuumansaugvorrichtungen für die Werkstücke verwendet man insbesondere dann, wenn eine mechanische Befestigung für das zu bearbeitende Werkzeug hinderlich oder störend wäre.
Bekannte Werkstückauflagetische der gattungsbildenden Art kennzeichnen sich dadurch, daß das Werkstück, beispielsweise eine mit Ornamenten zu befräsende Tür, auf den Vakuumelementen aufliegt. Ein wesentlicher Nachteil der bekannten Vorrichtungen besteht darin, wenn das Werkstück durchbohrt oder durchsägt werden muß, wobei dann die Vakuumelemente stören oder gar beschädigt werden können.

Es gibt Ausführungsformen von Werkstückauflagetischen, bei denen die ganze Auflagefläche durch solche Vakuumelemente gebildet wird oder aber auch Ausführungsformen, bei denen Einzelvakuumelemente verschieblich auf dem Tisch anordenbar sind, so daß entsprechend der zu bearbeitenden Form das Ansaugelement außerhalb des Werkzeugweges positioniert wird. Aber auch hier kommt es zu Beschädigungen des Vakuumelementes, da nicht immer eine korrekte Positionierung vorgenommen wird.

Aus Beschädigungen der Vakuumelemente resultieren u.a. auch hohe Werkzeugkosten.

Ein weiterer Nachteil der bekannten Vorrichtungen besteht in der relativ hohen und kostenintensiven Rüstzeit. Da, wie eingangs erwähnt, die Vakuumelemente zusammengesetzt werden, um außerhalb des Arbeitsweges des Werkzeuges zu liegen, fällt eine solche Umrüstarbeit bei jedem Modellwechsel an.

Der vorliegenden Erfindung liegt daher die Aufgabe zugrunde, den geschilderten Nachteilen wirkungsvoll entgegenzutreten. Insbesondere soll eine Vorrichtung der eingangs genannten Art derart weiter verbessert werden, daß praktisch kaum Zeit für ein Aufrüsten der Vorrichtung erforderlich ist, um sich an ein bestimmtes Werkstück anzupassen. Die Vorrichtung soll universell für jede Werkstücksform einsetzbar sein und dabei volle Funktionssicherheit aufweisen, d.h. eine Beschädigung des Vakuumteiles soll keinen Einfluß auf den Arbeitsfortschritt haben.

Diese Aufgaben werden erfindungsgemäß durch einen Werkstückauflagetisch nach den Kennzeichen des Hauptanspruchs gelöst.

Besonders bevorzugte Weiterbildungen der Erfindung sind in den Unteransprüchen gekennzeichnet.

Erfindungsgemäß wird nun ausgehend von einem Werkstückauflagetisch mit einer Vakuumansaugvorrichtung zur Werkstückfixierung, bestehend aus einem Saugkanal aufweisenden Vakuumelemente, die unterhalbdes Werkstückes eine Ansaugfläche bilden, den Vakuumelementen jeweils ein austauschbares Verschleißelement zur Werkstückauflage zugeordnet, das die Verlängerung des Saugkanals bildet. Hierbei können die Verschleißelemente als Hülse ausgebildet sein und mindestens einen Vakuumkanal aufweisen.
Die Verschleißelemente können eine horizontale Werkstückauflagefläche besitzen und bilden im Verbund eine Gesamtauflagefläche für das Werkstück. Das Verschlußelement kann steckbar oder schraubbar auf dem Vakuumelement befestigt werden, wobei das Verschleißelement beispielsweise aus gepreßtem oder gerolltem Papier, Karton, Kunststoff oder anderen geeigneten, gegebenenfalls auch aus Recyclingmaterial geschaffen ist.

Bevorzugterweise ist das Verschleißelement als Auflagegitter ausgebildet oder bildet ein solches Auflagegitter in Zusammenschluß mit einer Gruppe von Verschleißelementen. Das Verschleißelement einzel oder auch im Verbund kann aus einzelnen Segmenten zusammengesetzt werden, wobei dann ein Segment gleich ein Verschleißelement ist. Eine Gruppe von einzelnen Verschleißelementen bildet eine Auflagefläche bzw. Ansaugfläche. Der Werkstückauflagetisch ist durch eine oder mehrere Gruppen von Vakuumelementen mit bestückten Verschleißelementen gebildet. Es hat sich als Vorteil erwiesen die Anlage in Modulbauweise zu gestalten, wobei sowohl die Verschleißelemente in dieser Art zusammengesetzt werden, als auch der Auflagetisch durch Einzeltische gebildet wird. Im Vakuumstrom eines Vakuumelementes oder eines Verschleißelementes ist ein Sperrventil angeordnet, das bei Beschädigung des Verschleißelementes und somit der Zerstörung des Vakuumraumes sofort z.B. vom Luftstrom gesteuert wird und reagiert.

Das Verschlußelement selbst kann z.B. kreisrohrförmig oder quaderförmig ausgebildet sein. An den Stirnflächen des Verschleißelementes sind entsprechend geeignete Dichtmittel angeordnet, um sich auf die Auflagefläche des Vakuumelementes bzw. auf die Werkstückunterfläche anzupassen.
Im Vakuumstrom des Vakuumelementes oder der Verschleißelementes ist ein Filter angeordnet, um ein Eindringen von Säge- oder Frässtaub in den Vakuumstrom zu verhindern. Bei einer besonders bevorzugten Ausführungsform der Erfindung ist vorgesehen die Anlage mit einer Ausblas- oder Abblaseinrichtung bzw. mit einem Reinigungssystem zu versehen. Bei einer besonders bevorzugten Ausführungsform kann jedem Verschleißelement bzw. jedem Vakuumelement ein optisches Signalmittel zugeordnet sein. Über eine Zentraltastatur kann dann beispielsweise die Funktionsfähigkeit aller Signalmittel geprüft werden, wobei dann bei Betätigung einer weiteren Optionstaste zu erkennen ist, welches Verschleißelement beschädigt ist, indem das dort angeordnete Signalmittel ausfällt oder leuchtet, während die intakten Verschleißelemente mit einem gegensinnigen Signal belastet sind.
Es ist auch möglich, daß das Werkstück auf dem Bildschirm (CAD/CAM-Bearbeitung) angezeigt wird. Durch diese Darstellung kann im Voraus festgestellt werden, welche Verschleißteile bei einer Bearbeitung im Bearbeitungsweg des Werkzeugs liegen. Diese können dann vor Beginn der Bearbeitung entnommen werden.
Durch Verschlußkappen können die Vakuumelemente dann zusätzlich abgedeckt werden.
Diese Signalmittel können einfache Leuchtdioden sein. Mindestens zwei Verschleißelemente bzw. Vakuumelemente bilden einen Vakuumverbund, wobei jeweils ein Sperrventil einem Vakuumelement zugeordnet ist, und als ein vom Vakuumluftstrom gesteuertes Sperrventil ausgebildet ist und als solches im Vakuumkanal angeordnet ist. Es besteht auch die Möglichkeit das Ventil extern zu steuern. Sinnvoll ist es das Vakuumsystem in einzelne Systeme aufzusplitten. Bei einer weiteren Ausführungsform der vorliegenden Erfindung ist vorgesehen, das Verschleißelement höhenflexibel auszubilden, um sich auch an Werkstückrelief-Unterschiede anzupassen.
Ein weiteres Merkmal der Erfindung besteht darin, daß neben einer horizontalen Auflagefläche auch eine solche mit einer Neigung bildbar ist. Dies kann durch die Form der Verschleißelemente oder durch ein die Neigung bestimmbares Adapterelement erzielt werden.

Eine besonders bevorzugte Ausführungsform der Erfindung sieht vor, daß bereits bestehende Anlagen nachgerüstet werden können. Dieser ist erfindungsgemäß vorgesehen das Verschleißelement mittels eines Adapters auf das vorhandene Vakuumelement aufzubringen, wobei diese Ausführungsformensowohl mit oder ohne Ventilsteuerungen denkbar sind.

Anhand den beigefügten Zeichnungen, die besonders bevorzugte Ausführungsbeispiele der Erfindung zeigen, wird diese nun näher beschrieben.

Dabei zeigen:
- Figur 1: eine Draufsicht auf die erfindungsgemäße Vorrichtung;
- Figur 2: eine Stirnansicht aus der in Figur 1 angedeuteten Richtung A;
- Figur 3: das in Figur 2 mit B gekennzeichnete Detail in einer Vergrößerung;
- Figur 4: das Sperrventil;
- Figur 5: die Verschleißelemente als Gitter ausgebildet;
- Figur 6 bis Figur 8: verschiedene besonders bevorzugte Ausführungsformen des Verschleißelementes.
- Figur 9: eine geneigte Auflagefläche.

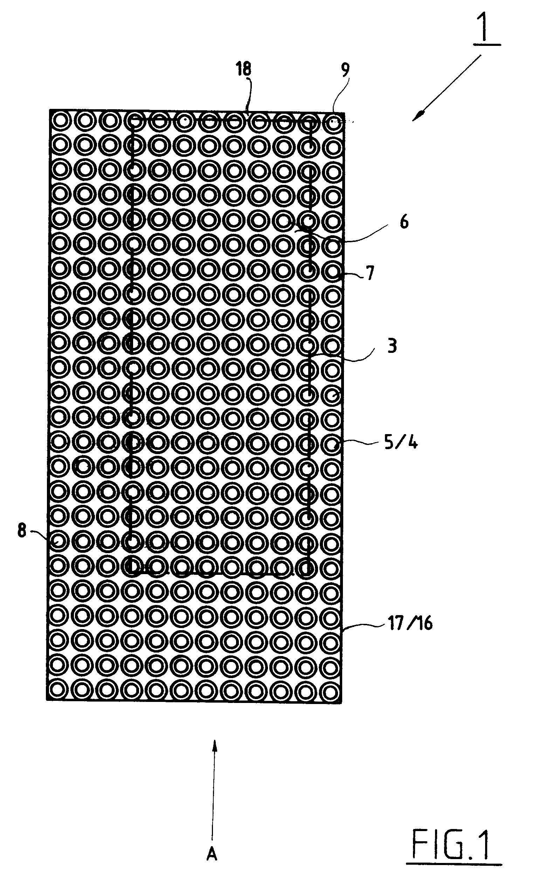

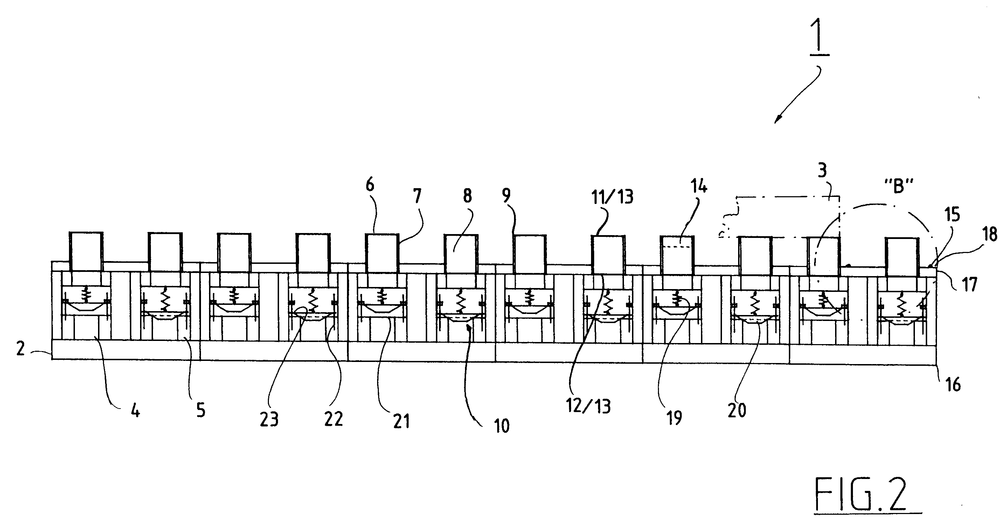

Figuren 1 und 2 zeigen den erfindungsgemäßen Werkstückauflagetisch 1. In diesem Ausführungsbeispiel besteht der Werkstückauflagetisch 1 aus einem Grundgestell 16, auf dem eine Basisplatte 17 angeordnet ist. In der Basisplatte 17 ist die Vakuumansaugvorrichtung 2 integriert. Die Oberkante 18 der Basisplatte 17 weist flächendeckend ein Netz von Vakuumelementen 5 auf, die zugleich Austrittsöffnungen für den Saugkanal 4 bilden. Auf diese Vakuumelemente 5 sind nun erfindungsgemäß hochragende Verschleißelemente 7 aufgeschraubt oder aufgesteckt, die wiederum einen Vakuumkanal 8 besitzen, der die Verlängerung des Saugkanals 4 für die Vakuumelemente 5 bildet. Die Gesamtheit der Verschleißelemente 7 bzw. diese, welche von dem Werkstück 3 abgedeckt werden, bilden die Ansaugfläche 6.

Jedes Verschleißelement 7 besitzt eine Werkstückauflagefläche 9. In der Praxis muß nun mit einem Fräs-, Schleif-, Säge- oder Bohrwerkzeug gearbeitet werden. Um nun die Bearbeitungskontur bei der Werkzeugrüstung außer Acht zu lassen, sind die, die Werkstückauflagefläche bildenden Teile durch die Verschleißelemente 7 vertreten. Bevorzugterweise bestehen diese Verschleißelemente 7 aus einem billigen Material. Dies kann gepreßtes Papier, Pappe oder auch Kunststoff oder ein ansonsten günstig zu beziehender Recycle-Werkstoff sein. Die Verschleißelemente 7, die durch das beispielsweise kurvenabfahrende Werkzeug, welches sich durch das Werkstück 3 durcharbeitet, beschädigt werden, werden in kürzester Zeit ausgetauscht und ersetzt, wobei Materialkosten gegenüber der ansonsten anzufallenden Rüstzeit völlig außer Acht bleiben können.

Bei einer entsprechenden Auslegung, d.h. einer entsprechenden Kapazität der Vakuumeinheit könnte auf die Anordnung von Sperrventilen verzichtet werden.

Im Sinne der vorliegenden Erfindung liegt sowohl die symmetrische und regelmäßige Verteilung der Vakuumelemente, als auch die willkürliche, durch lose verschiebbare Teile erzielbare Anordnung.

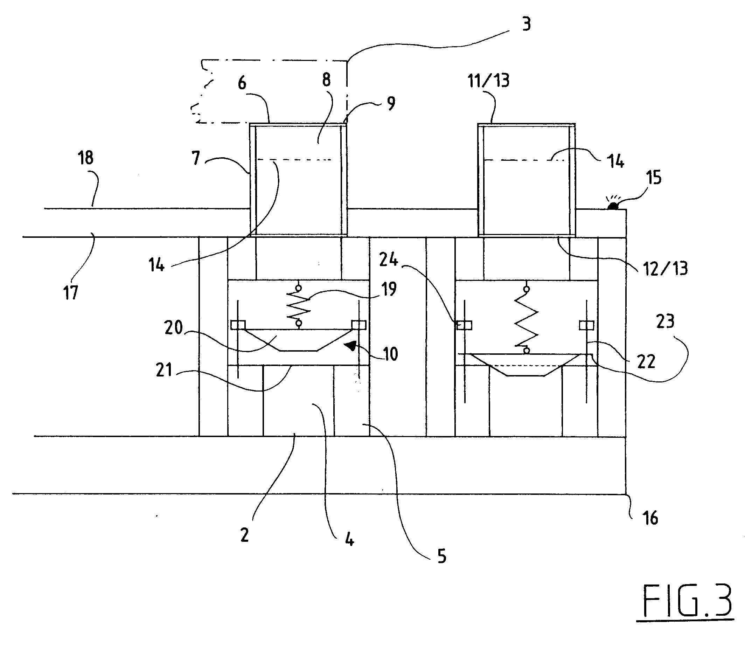

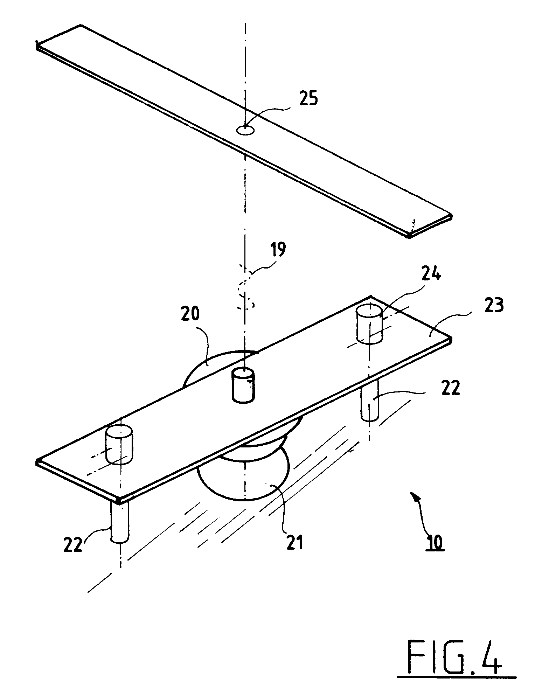

Die Anordnung eines solchen Sperrventils ist am besten aus den Figuren 3 und 4 zu entnehmen.

Figur 3 zeigt ein Detail des in Figur 2 mit B gekennzeichneten Teils in einer Vergrößerung, wobei die dargestellten Elemente zumindest teilweise im Schnitt gezeigt sind, um das Innenleben zu erkennen.

Mit dem Bezugszeichen 7 ist wiederum das Verschleißelement gekennzeichnet. Es kann, wie in diesem Ausführungsbeispiel als Hülse ausgebildet sein, das in die Basisplatte 17 eingeschraubt oder eingesteckt wird. An den Stirnflächen 11 und 12 weist das Verschleißelement 7 entsprechende Dichtmittel 13 auf. Im Vakuumkanal ist das Sperrventil 10 integriert.

In der Situation gemäß Figur 3 ist das rechts außen dargestellte Verschleißelement 7 nicht vom Werktück 3 abgedeckt, wobei zu erkennen ist, daß dieses Sperrventil 10 in geschlossenem Zustand vorliegt. Dies erklärt sich so, daß die Zugkraft der Feder 19 so eingestellt ist, daß bei einer Ansaugtätigkeit der Vakuumansaugvorrichtung 2 der Raum unterhalb des Werkstücks 3 mit Vakuum beaufschlagt wird, wobei das Ventil durch die Federkraft noch in der geöffneten Stellung verbleibt. Kann jedoch, wie bei dem rechten Verschleißelement 7 dargestellt, Luft nachströmen, wird durch die Strömungskraft das Ventil 10 geschlossen. Somit wird das nicht von dem Werkstück 3 abgedeckte Verschleißelement 7 aus dem Vakuumverbund ausgeschlossen. Das gleiche geschieht, wenn ein solches Verschleißelement 7 durch das Werkzeug beschädigt wird. Die verbleibenden Vakuumeinheiten und nicht beschädigten Verschleißelemente reichen dazu aus, die Spannkraft zu erhalten.

Mit dem Bezugszeichen 14 ist ferner noch ein Filter gekennzeichnet, der verhindert, daß Span- und Sägestaub in das Vakuumsystem eindringt.

Ferner ist noch auf das mit dem Bezugszeichen 15 gekennzeichnete Signalmittel zu verweisen. Mit einer an sich gängigen Schaltungstechnik ist es möglich eine Kommunikation zwischen Vakuumsystem und Signaleinrichtung herzustellen. Somit kann die Bedienungsperson sofort erkennen, welches Verschleißelement 7 beschädigt ist, wenn z.B. ein solches Signalmittel 15 aufleuchtet.

Der besondere Vorteil der vorliegenden Erfindung liegt darin, daß somit die Bearbeitungsstation ,welche mit der erfindungsgemäßen Vorrichtung bestückt ist, von fachfremden Personal bedient werden kann. Ferner ist gleichgültig, wie das Werkstück auf dem Werkzeugauflagetisch ausgerichtet wird, da der Verfahrweg des Werkzeuges völlig außer Acht und unberücksichtigt bleiben kann.

Die Figur 4 zeigt eine Vergrößerung des Ventils 10. Das Ventil 10 mit seiner Stellmechanik kann innerhalb des Vakuumkanals 7 eingesetzt sein und mit diesen eine Einheit bilden oder aber auch als zusätzliches separates Teil eingeführt werden. Mit dem Bezugszeichen 20 ist der Ventilteller gekennzeichnet. Er besitzt in diesem Ausführungsbeispiel eine Kegelform, welche sich sperrend in die Ventilbohrung 21 (siehe Figur 3) einsitzt oder bei Freigabestellung von dieser entfernt. Links und rechts der Ventilbohrung 21 sind Ventilführungen 22 angeordnet. An diesen säulenförmigen Teilen gleitet die Führungsleiste 23, welche verstellbar mit den Anschlägen 24 begrenzt sind. Durch die Feder 19 erhält das Ventil 10 bzw. der Ventilteller 20 ständig eine Zugvorspannung, wobei die Feder 19 über die Aufhängung 25 ein Widerlager erhält.

Die vorgenannte Variante kann auch durch andere Ventilarten, mit anderen Ventilsteuerungen ersetzt werden.

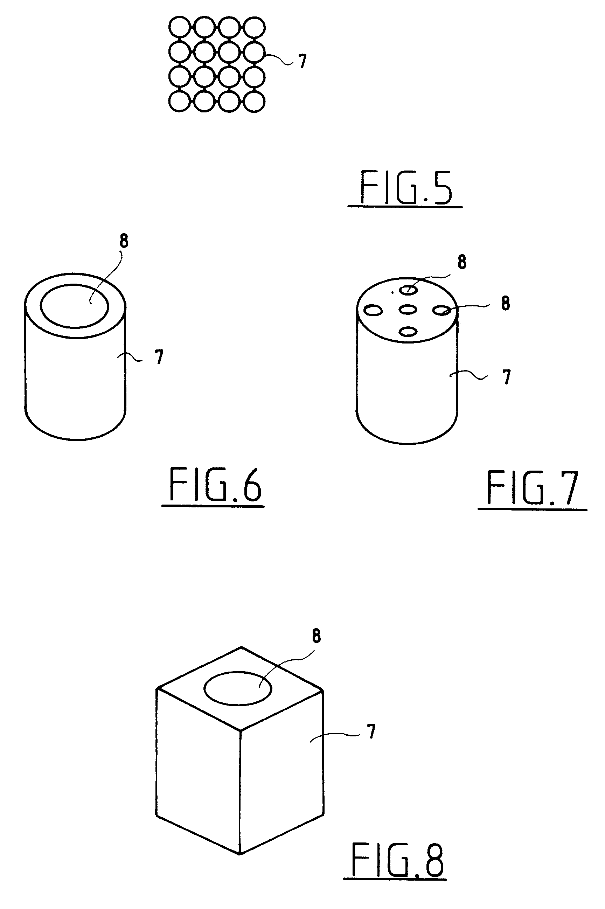

Die Figur 5 zeigt ein Ausführungsbeisiel der Erfindung als Gitter. Hierbei bilden die einzelnen Verschleißelemente 7 ein Gitter, das den gesamten Werkstückauflagetisch oder durch einzelne Gitterelemente diesen abdeckt.

Selbstverständlich liegt im Sinne der Erfindung auch, kein festes statisches Auflagegitter oder eine statische Auflagefläche für das Werktück zu bilden, sondern kann auch aus einzelnen, verschieblichen Elementen gebildet werden.

Die Figuren 6 bis 8 zeigen verschiedene Ausführungsvarianten der vorliegenden Erfindung bzw. der einzelnen Verschleißelemente 7. Die Figur 6 zeigt eine hülsenartige Formgebung, während in Figur 7 ein Vollkörper dargestellt ist, der mit einzelnen Vakuumkanälen 8 versehen ist.

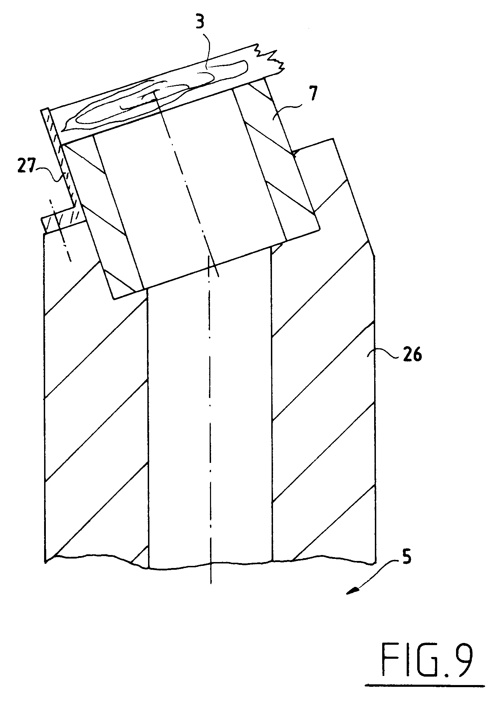

Figur 8 zeigt eine quaderförmige Ausführungsform des Verschleißelementes 7.

Figur 9 zeigt eine Variante der vorliegenden Erfindung, bei der das Werkstück 3 unter einer Neigung bearbeitet wird. Um die Werkstücksneigung zu erzielen, ist zwischen Verschleißelement 7 und Vakuumelement 5 ein Adapterteil 26 angeordnet, in das das Verschleißelement 7 unter Einnahme einer Schrägstellung eingesetzt werden kann. Das Werkstück 3 kann an einem austauschbaren Anschlag 27 zur Anlage kommen.

Gemäß der vorliegenden Erfindung wird ein Werkstückauflagetisch geschaffen, der sich der Vakuumansaugtechnik bedient und dabei die ansonsten aufwendigen Rüstzeiten der Maschine eliminiert und die Kosten durch die Vermeidung von Beschädigungen an teuren Anlagen reduziert wird.

### Bezugszeichenliste

- 1: Werkstückauflagetisch
- 2: Vakuumansaugvorrichtung
- 3: Werkstück
- 4: Saugkanal
- 5: Vakuumelement
- 6: Ansaugfläche
- 7: Verschleißelement
- 8: Vakuumkanal von 7
- 9: Werkstückauflagefläche von 7
- 10: Sperrventil
- 11: Stirnfläche von 7
- 12: Stirnfläche von 7
- 13: Dichtmittel
- 14: Filter
- 15: Signalmittel
- 16: Grundgestell
- 17: Basisplatte
- 18: Oberkante von 17
- 19: Feder von 10
- 20: Ventilteller
- 21: Ventilbohrung
- 22: Ventilführung
- 23: Führungsleiste
- 24: Anschlag für 23
- 25: Aufhängung
- 26: Adapterteil
- 27: austauschbarer Anschlag

## Patentansprüche

1. Werkstückauflagetisch mit einer Vakuumansaugvorrichtung zur Werkstückfixierung, bestehend aus, einen Saugkanal aufweisenden Vakuumelemente, die unterhalb des Werkstücks eine Ansaugfläche bilden,
dadurch gekennzeichnet,
daß die Vakuumelemente (5) jeweils ein austauschbares Verschleißelement (7) zur Werkstückauflage aufweisen, das die Verlängerung des Saugkanals (4) bildet.

2. Werkstückauflagetisch nach Anspruch 1,
dadurch gekennzeichnet,
daß die Verschleißelemente (7) als Hülsen ausgebildet sind.

3. Werkstückauflagetisch nach Anspruch 1 und 2,
dadurch gekennzeichnet,
daß das Verschleißelement (7) mindestens einen Vakuumkanal (8) aufweist.

4. Werkstückauflagetisch nach Anspruch 1 bis 3,
dadurch gekennzeichnet,
daß das Verschleißelement (7) eine horizontale Werkstückauflagefläche (9) aufweist.

5. Werkstückauflagetisch nach Anspruch 1 bis 4,
dadurch gekennzeichnet,
daß das Verschleißelement (7) auf das Vakuumelement (5) steckbar oder klemmbar ist.

6. Werkstückauflagetisch nach Anspruch 1 bis 4,
dadurch gekennzeichnet,
daß das Verschleißelement (7) auf das Vakuumelement (5) schraubbar ist.

7. Werkstückauflagetisch nach Anspruch 1 bis 6,
dadurch gekennzeichnet,
daß das Verschleißelement (7) aus gepreßtem Papier, gerolltem Papier, Hartpapier oder gleichwertigem Material geschaffen ist.

8. Werkstückauflagetisch nach Anspruch 1 bis 6,
dadurch gekennzeichnet,
daß das Verschleißelement (7) aus Kunststoff oder Metall geschaffen ist.

9. Werkstückauflagetisch nach Anspruch 1 und mindestens einem der vorhergehenden Ansprüche,
dadurch gekennzeichnet,
daß das Verschleißelement (7) als Auflagegitter ausgebildet ist.

10. Werkstückauflagetisch nach Anspruch 1 und mindestens einem der vorhergehenden Ansprüche,
dadurch gekennzeichnet,
daß das Verschleißelement (7) segmentweise zusammensetzbar ist.

11. Werkstückauflagetisch nach Anspruch 1 bis 10,
dadurch gekennzeichnet,
daß eine Gruppe von einzelnen Verschleißelementen (7) eine Auflagefläche bzw. Ansaugfläche bilden.

12. Werkstückauflagetisch nach Anspruch 1 bis 11,
dadurch gekennzeichnet,
daß der Werkstückauflagetisch (1) durch eine oder mehrere Gruppen von Vakuumelementen (5) mit bestückten Verschleißelementen (7) gebildet ist.

13. Werkstückauflagetisch nach Anspruch 1 bis 12,
dadurch gekennzeichnet,
daß im Vakuumstrom eines Vakuumelementes (5) oder Verschleißelementes (7) ein Sperrventil (10) angeordnet ist.

14. Werkstückauflagetisch nach Anspruch 1 bis 13,
dadurch gekennzeichnet,
daß das Verschleißelement (7) kreisrohrförmige Gestalt aufweist.

15. Werkstückauflagetisch nach Anspruch 1 bis 13,
dadurch gekennzeichnet,
daß das Verschleißelement (7) quaderförmig oder vieleckig ausgebildet ist.

16. Werkstückauflagetisch nach Anspruch 1 bis 15,
dadurch gekennzeichnet,
daß an den Stirnflächen (11,12) des Verschleißelementes (7), Dichtmittel (13) angeordnet sind.

17. Werkstückauflagetisch nach Anspruch 1 bis 16,
dadurch gekennzeichnet,
daß im Vakuumstrom des Vakuumelementes (5) oder des Verschleißelementes (7) ein Filter (14) angeordnet ist.

18. Werkstückauflagetisch nach Anspruch 1 bis 17,
dadurch gekennzeichnet,
daß jedem Verschleißelement (7) bzw. Vakuumelement (5) ein optisches Signalmittel (15) zugeordnet ist.

19. Werkstückauflagetisch nach Anspruch 1 bis 18,
dadurch gekennzeichnet,
daß mindestens zwei Verschleißelemente (7) bzw. Vakuumelemente (5) einen Vakuumverbund bilden.

20. Werkstückauflagetisch nach Anspruch 13,
dadurch gekennzeichnet,
daß das Sperrventil (10) als ein vom Vakuumluftstrom gesteuertes Sperrventil ausgebildet und als solches im Vakuumkanal angeordnet ist.

21. Werkstückauflagetisch nach Anspruch 1 bis 20,
dadurch gekennzeichnet,
daß das Verschleißelement (7) höhenvariabel ausgebildet ist.

22. Werkstückauflagetisch nach mindestens einem der Ansprüche 1 bis 21,
dadurch gekennzeichnet,
daß die Verschleißelemente (7) eine geneigte Werkstückauflagefläche (9) mit austauschbarem Anschlag (27) aufweisen oder eine solche Neigung bilden.

23. Werkstückauflagetisch nach Anspruch 22,
dadurch gekennzeichnet,
daß zwischen Vakuumelement (5) und Verschleißelement (7) ein Adapterteil (26) einsetzbar ist, das die Neigung für die Werkstückauflagefläche (9) vorgibt.

24. Werkstückauflagetisch nach mindestens einem der vorhergehenden Ansprüche,
dadurch gekennzeichnet,
daß das Sperrventil (10) eine externe Steuerung aufweist.

25. Werkstückauflagetisch nach Anspruch 1 bis 24,
dadurch gekennzeichnet,
daß die Ansaugfläche durch unterteilte und getrennte Vakuumsysteme gebildet ist.

26. Werkstückauflagetisch nach Anspruch 1 bis 25,
dadurch gekennzeichnet,
daß die Verschleißelemente (7) in Modulbauweise zusammensetzbar sind.

27. Werkstückauflagetisch nach Anspruch 1 bis 26,
dadurch gekennzeichnet,
daß ein Werkstückauflagetisch durch mehrere Einzeltische bildbar ist.

28. Werkstückauflagetisch nach Anspruch 1 bis 27,
dadurch gekennzeichnet,
daß der Werkstückauflagetisch eine Absaug- oder Abblaseinrichtung oder ein Reinigungssystem aufweist.

29. Werkstückauflagetisch nach Anspruch 1 bis 28,
dadurch gekennzeichnet,
daß unterschiedliche Bau- bzw. Verschleißelemente verschiedene farbliche Kennzeichnungen aufweisen.

30. Werkstückauflagetisch nach Anspruch 1 bis 29,
dadurch gekennzeichnet,
daß die Vakuumelemente ohne Verschleißelemente mittels einer Kappe abdeckbar sind.

31. Werkstückauflagetisch nach Anspruch 1 bis 30,
dadurch gekennzeichnet,
daß die Verschleißelemente nebst Adaptionsmitteln mit oder ohne Ventilsteuerung einen Nachrüstbausatz für bestehende Anlagen bilden.
